(19) Europäisches Patentamt / European Patent Office / Office européen des brevets

(11) **EP 3 385 906 B1**

(12) **EUROPEAN PATENT SPECIFICATION**

(45) Date of publication and mention
of the grant of the patent:
**17.06.2020 Bulletin 2020/25**

(51) Int Cl.:
**G06T 7/00** *(2017.01)*  **G01B 11/30** *(2006.01)*
**G06T 7/41** *(2017.01)*

(21) Application number: **18162767.0**

(22) Date of filing: **20.03.2018**

(54) **DETERMINING SURFACE ROUGHNESS**

BESTIMMUNG VON OBERFLÄCHENRAUIGKEIT

DÉTERMINATION DE LA RUGOSITÉ DE SURFACE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.04.2017 GB 201705406**

(43) Date of publication of application:
**10.10.2018 Bulletin 2018/41**

(73) Proprietor: **Rolls-Royce plc
London N1 9FX (GB)**

(72) Inventors:
• **Vadakke Matham, Murukeshan**
**Derby, Derbyshire DE24 8BJ (GB)**
• **Haridas, Aswin**
**Derby, Derbyshire DE24 8BJ (GB)**
• **Crivoi, Alexandru**
**Derby, Derbyshire DE24 8BJ (GB)**
• **Patinharekandy, Prabhathan**
**Derby, Derbyshire DE24 8BJ (GB)**

(74) Representative: **Rolls-Royce plc
Intellectual Property Dept SinA-48
PO Box 31
Derby DE24 8BJ (GB)**

(56) References cited:
• **MAYADA B AL-QUZWENY ET AL: "Different methods for characterizing surface roughness using laser speckle technique", IRAQI JOURNAL OF PHYSICS, vol. 12, 1 January 2014 (2014-01-01), pages 21-29, XP055496040,**
• **Anonymous: "Otsu's method - Wikipedia", , 12 January 2017 (2017-01-12), XP055468978, Retrieved from the Internet: URL:https://en.wikipedia.org/w/index.php?title=Otsu's_method&oldid=759649503 [retrieved on 2018-04-20]**
• **HARIDAS ASWIN ET AL: "Fractal speckle image analysis for surface characterization of aerospace structures", PROCEEDINGS OF SPIE, SPIE, 1000 20TH ST. BELLINGHAM WA 98225-6705 USA, vol. 10449, 13 June 2017 (2017-06-13), pages 104491T-104491T, XP060093460, ISSN: 0277-786X, DOI: 10.1117/12.2270769 ISBN: 978-1-5106-1533-5**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD

This disclosure relates to methods and systems for determining the roughness of surfaces.

## BACKGROUND

Optical methods of surface roughness characterisation are well-established. A known approach is to illuminate a surface with coherent light from a laser. The light scattered from the surface may then be directly imaged, allowing capture of a speckle pattern. As the speckle pattern is caused by constructive and destructive interference of the laser light, which is at least in part dependent upon the surface geometry down to the wavelength scale, the image of the speckle pattern may be processed to estimate the surface roughness.

However, problems exist in terms of optimising the efficiency of the image processing pipeline such that the technique may be used for on-line surface roughness measurement.

Al-Quzweny, Mayada B. et al "Different methods for characterizing surface roughness using laser speckle technique." Iraqi Journal of Physics (IJP) 12, no. 23 (2014): 21-29 (XP055496040) discloses use of statistical properties of speckle patterns for measuring surface roughness. Four calibration relationships enable surface roughness to be evaluated. The first one is based on intensity contrast of the speckle, the second is based on analysis of speckle binary image, the third is on size of speckle pattern spot, and the fourth is based on characterization of the energy feature of the grey level co-occurrence matrices for the speckle pattern.

## SUMMARY

The invention is directed towards methods of and systems for determining surface roughness.

The method includes obtaining an image of speckle caused by the scattering of coherent light from a surface. Then, the image is converted into a binary image according to a threshold, thereby classifying pixels below the threshold as background pixels and pixels above the threshold as foreground pixels. Then, one or more regions of connected foreground pixels are identified in the binary image, in which any two foreground pixels in a region are joined by a continuous path of foreground pixels. Then, the total number of regions identified is evaluated, and the number of pixels in the largest region is evaluated, each of which correlate with surface roughness. Then, the total number of regions identified and the number of pixels in the largest region are converted to a measure of the surface roughness of the surface using a predefined relation therebetween. An indication of the surface roughness of the surface is then outputted.

There is also provided a measurement system which implements the method, and instructions executable by a computer which cause the computer to perform the method.

## BRIEF DESCRIPTION OF THE DRAWINGS

Embodiments will now be described by way of example only with reference to the accompanying drawings, which are purely schematic and not to scale, and in which:

> Figure 1 shows a sectional side view of a turbofan engine;
> Figure 2 shows a plan view of the fan of the engine of Figure 1;
> Figure 3 shows a measurement system according to the present invention;
> Figure 4 shows components within the processing device forming part of the measurement system of Figure 3;
> Figure 5 shows steps carried out by the measurement system to determine surface roughness;
> Figure 6 shows steps carried out to obtain images of the speckle caused by the scattering of coherent light from a surface;
> Figure 7A, 7B and 7C show images of the speckle obtained by the method of Figure 6;
> Figure 8 shows steps carried out to process the images obtained by the method of Figure 6;
> Figure 9 shows steps carried out to produce binary images;
> Figures 10A, 10B and 10C show binary images produced by the method of Figure 9;
> Figure 11 shows steps carried out to identify connected components in the binary images; and
> Figures 12A and 12B show, respectively, a plot of the number of regions of connected components against surface roughness, and a plot of the number of pixels in the largest region against surface roughness.

## DETAILED DESCRIPTION

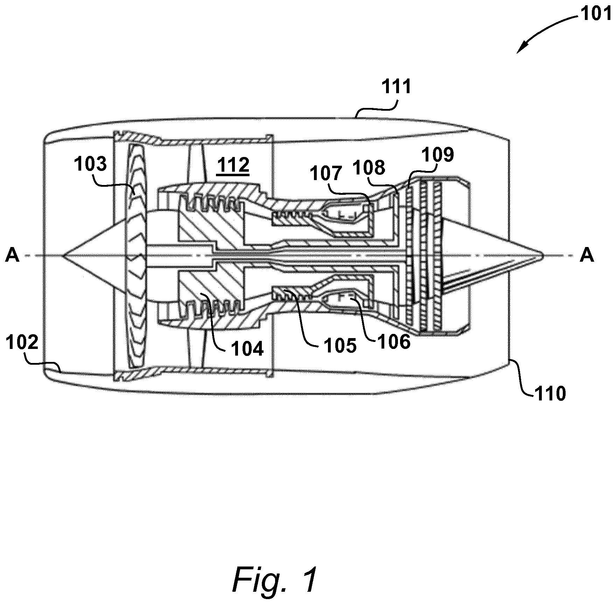

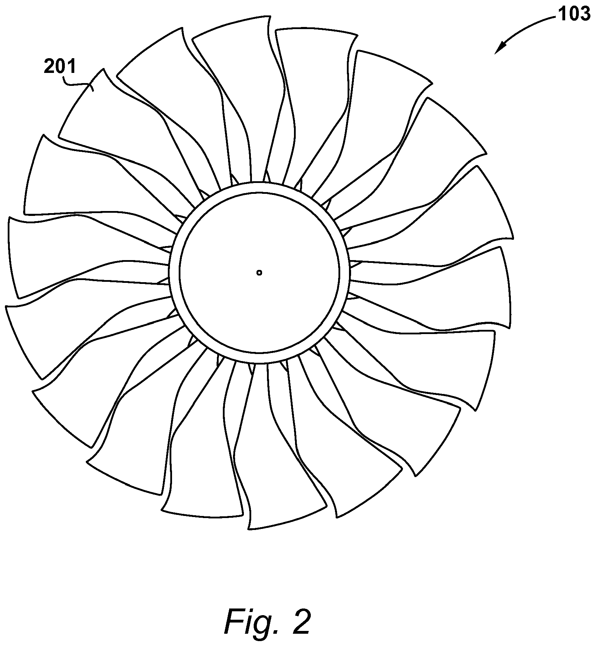

A turbofan engine is shown in Figure 1, with its fan being shown in plan view in Figure 2.

The engine **101** has a principal and rotational axis **A-A** and comprises, in axial flow series, an air intake **102,** a propulsive fan **103,** an intermediate pressure compressor **104,** a high-pressure compressor **105,** combustion equipment **106,** a high-pressure turbine **107,** an intermediate pressure turbine **108,** a low-pressure turbine **109,** and an exhaust nozzle **110**. A nacelle **111** generally surrounds the engine **101** and defines both the intake **102** and the exhaust nozzle **110**.

The engine **101** works in the conventional manner so that air entering the intake **102** is accelerated by the fan **103** to produce two air flows: a first air flow into the intermediate pressure compressor **104** and a second air flow which passes through a bypass duct **112** to provide propulsive thrust. The intermediate pressure compressor **104** compresses the air flow directed into it before delivering that air to the high pressure compressor **105** where further compression takes place.

The compressed air exhausted from the high-pressure compressor **105** is directed into the combustion equipment **106** where it is mixed with fuel and the mixture combusted. The resultant hot combustion products then expand through, and thereby drive the high pressure turbine **107,** intermediate pressure turbine **108,** and low pressure turbine **109** before being exhausted through the nozzle **110** to provide additional propulsive thrust. The high pressure turbine **107,** intermediate pressure turbine **108,** and low pressure turbine **109** drive respectively the high pressure compressor **105,** intermediate pressure compressor **104,** and fan **103,** each by a suitable interconnecting shaft.

As the fan **103** is the one of the first components encountered by air entering the intake **102** of the engine **101,** it is particularly important to ensure that the blades **201** of the fan **103,** identified in Figure 2, are optimised aerodynamically.

Many developments have therefore taken place in terms of improving fan blade geometry (i.e. on the macro scale). This has resulted in fan blades, such as those forming part of the fan **103,** having complex surfaces with high degrees of variation in curvature.

However, it is also important to ensure that air flow is optimised by ensuring the surface roughness of the fan blades **201** is within acceptable limits (i.e. on the micro scale).

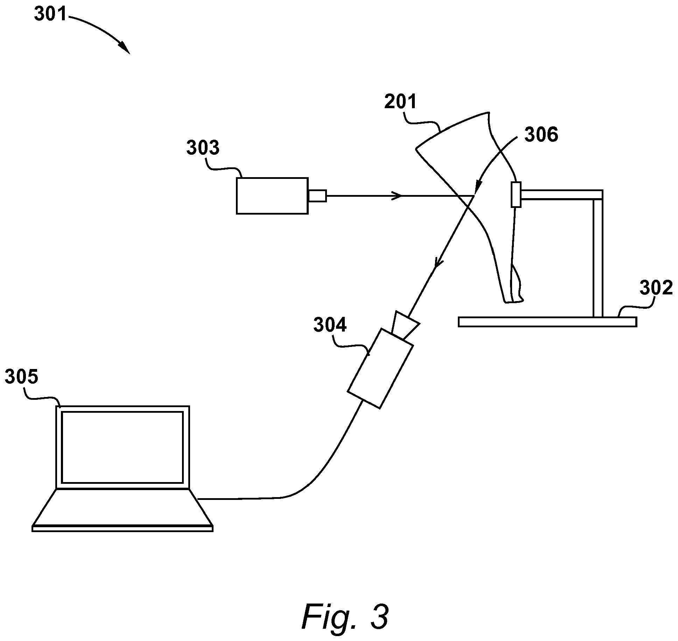

A measurement system for determining the roughness of a surface according to an aspect of the present invention is illustrated in Figure 3.

The measurement system is indicated generally at **301,** and may be employed for determining the roughness of the fan blade **201** to ensure its surface roughness meets the design specification. However, it will be appreciated that the principles employed by the system allow it to be used for measurement of the roughness of any surface, such as bearings, or the ball of a prosthesis, etc.

Measurement system **301** includes a fixture **302** in which a component may be mounted, such as the fan blade **201** in this example. The exact configuration of the fixture **302** will be understood by those skilled in the art as not being central to the present invention, and instead any fixture in which the component whose roughness is being measured may be held can be used.

A coherent illumination device such as, in this example, a laser **303** is provided to illuminate the surface of the component being analysed. In the present example, the laser **303** is an infrared laser configured to output coherent light at a wavelength of 1064 nanometres at a power of 80 watts. It will be appreciated that different wavelengths and/or different output powers may be adopted depending upon the particular application of the measurement system. Furthermore, the beam width may be selected to match the desired sample area and thus is dependent on the component and the parameters of the testing being undertaken. Thus in an example, an appropriate optical arrangement may be provided to broaden or narrow, and then collimate the light emanating from the laser **303.**

In operation, laser light from the laser **303** is directed towards to surface of the component, and is scattered. Due to the generally rough surface of the component, the path length of the wavefronts is such that interference occurs and the intensity of the light varies across the scattered light field. Thus the scattered light field is related to the surface geometry which caused the scattering.

The scattered light field is therefore imaged by an imaging device, which in this example is a camera **304.** The camera **304** is in the present example an infrared-sensitive indium gallium arsenide (InGaAs) camera, which in the present example is fitted with a 25 millimetre lens with a fixed aperture of f/16. Of course, it will be appreciated by those skilled in the art that the particular imaging device may be chosen in dependence upon the specifications of the illumination device. In addition, or alternatively, the choice of lens aperture and focal length may be varied, possibly in dependence on the illumination level and/or the size of component being imaged.

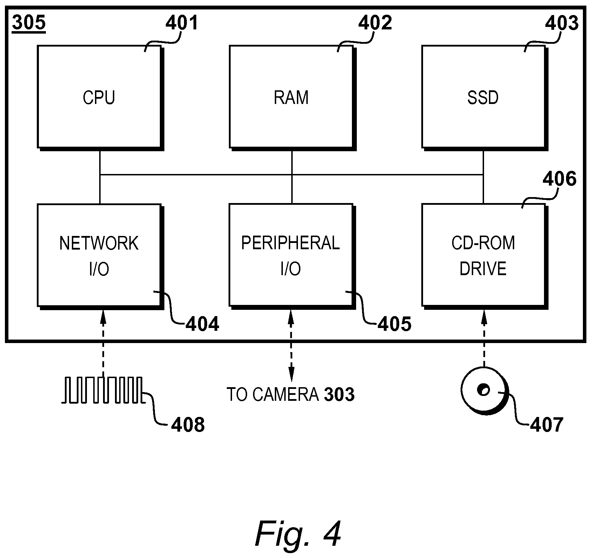

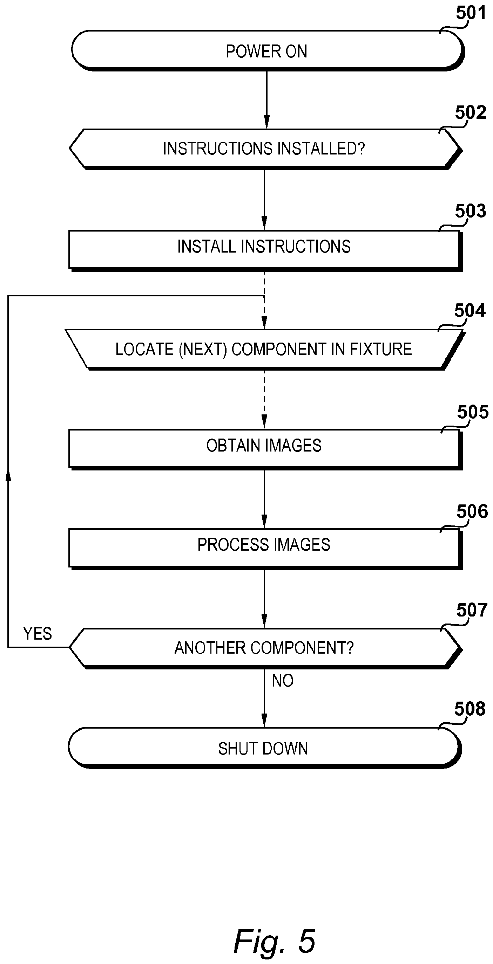

The measurement system **301** further comprises a processing device such as, in this example, a personal computer **305** to store and process the images obtained by the camera **304.** The devices within the personal computer **305** which enable it to process the images will be described with reference to Figure 4, whilst the instructions it executes will be described with reference to Figures 5 to 12.

In use, the measurement system **301** facilitates determination of the surface roughness by illuminating the surface of the component at a point **306** with coherent light produced by the laser **303.** An image of speckle caused by the scattering of the coherent light from the surface is then obtained by the camera **304.**

The image is then converted by the personal computer **305** into a binary image according to a threshold, thereby classifying pixels below the threshold as background pixels and pixels above the threshold as foreground pixels.

Connected components are then identified in the binary image. The connected components are regions of connected foreground pixels, in which any two foreground pixels in a region are joined by a continuous path of foreground pixels. The total number of regions identified is then evaluated, along with the number of pixels in the largest region. It has been shown by the present inventors that these values correlate to the actual surface roughness. An indication of the surface roughness of the surface may then be outputted.

Devices within the personal computer **305** are illustrated in Figure 4.

The personal computer **305** comprises a processor such as a central processing unit (CPU) **401**. In this instance, central processing unit **401** is a single Intel (RTM) Core i7 processor, having four on-die processing cores operating at 3.2 gigahertz. It is of course possible that other processor configurations could be provided, and indeed several such processors could be present to provide a high degree of parallelism in the execution of instructions.

Memory is provided by random access memory (RAM) **402,** which in this example is double data rate (DDR) SDRAM totalling 8 gigabytes in capacity. RAM **402** allows storage of frequently-used instructions and data structures by the personal computer **305**. A portion of RAM **402** is reserved as shared memory, which allows high speed inter-process communication between applications running on personal computer **305**.

Permanent storage is provided by a storage device such a solid-state disk (SSD) **403,** which in this instance has a capacity of 512 gigabytes. SSD **403** stores operating system and application data. In alternative embodiments, a hard disk drive could be provided, or several storage devices provided and configured as a RAID array to improve data access times and/or redundancy.

A network interface **404** allows personal computer **305** to connect to a packet-based network such as the Internet. Additionally, personal computer **305** comprises a peripheral interface **405** such as a universal serial bus (USB (RTM)). In this embodiment, the peripheral interface **405** connects the personal computer **305** to the camera **304** to allow transfer of the images obtained in use. Whilst the peripheral interface **405** in the present embodiment is a wired USB (RTM) connection, it is contemplated that other connection types may be used such as wireless connections using, for example, an 802.11x standard.

Personal computer **305** also comprises an optical drive, such as a CD-ROM drive **406,** into which a non-transitory computer readable medium such as an optical disk, e.g. CD-ROM **407** can be inserted. CD-ROM **407** comprises computer-readable instructions to enable the processing method of the present invention. These are, in use, installed on solid-state disk **403,** loaded into RAM **402** and then executed by CPU **401**. Alternatively, the instructions may be downloaded from a network via the network interface **404** as packet data **408**.

It is to be appreciated that the above system is merely an example of a configuration of system that can fulfil the role of personal computer **305**. Any other system having a processing device, memory, a storage device and a network interface could equally be used. Thus in an alternative embodiment it is envisaged that an application-specific integrated circuit (ASIC) or field-programmable gate array (FPGA) could be configured with the same instructions so as to perform substantially the same operations as the personal computer **305**.

Operations carried out with the measurement system **301** in practice are detailed in Figure 5.

At step **501,** the measurement system **301,** comprising the laser **302,** the camera **304** and personal computer **305,** is powered on. At step **502** a question is asked as to whether image processing instructions have been installed on the personal computer **305**. If not, then at step **503** the instructions are obtained either from CD-ROM **407** or via the network connection **404** as previously described. Following install, or if the instructions have previously been installed, then at step **504** a manual procedure is carried out consisting of locating a component, such as fan blade **201,** in the fixture **302**.

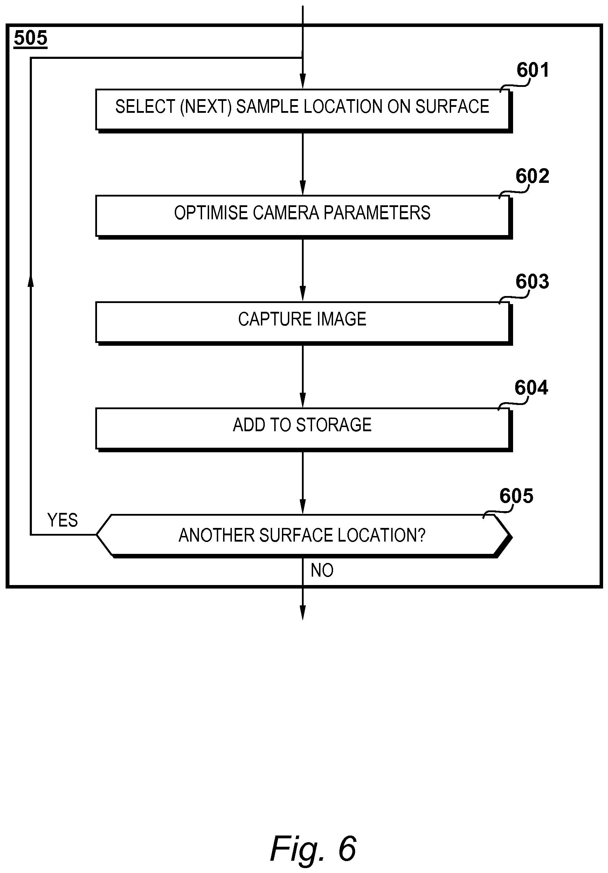

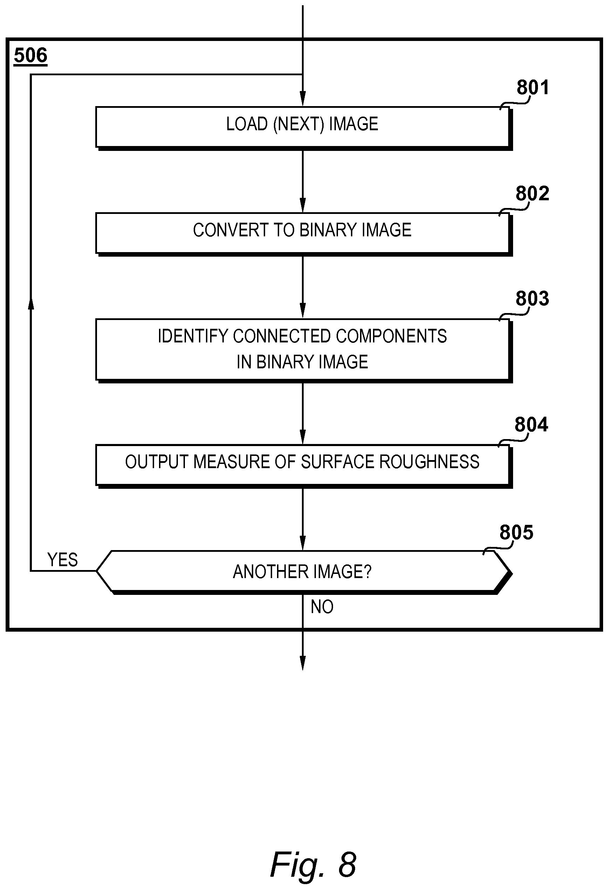

The measurement system **301** then captures images at step **505,** and processes them at step **506**. Procedures carried out to capture images during step **505** will be described with reference to Figure 6, whilst procedures carried out to process the images will be described with reference to Figures 8, 9 and 11.

Following processing of the images, a question is asked at step **507** as to whether another component is to be analysed. If this question is answered in the affirmative, then control returns to step **504** where the new component is located in the fixture **302**. If the question asked at step **507** is answered in the negative, then at step **508** the measurement system is shut down.

A procedure carried out during step **505** to obtain the images of the speckle caused by the scattering of the laser light from the surface of the component are set out in Figure 6.

At step **601,** a sample location on the surface of the component being imaged is selected. Depending on the size of the component, the width of the beam produced by laser **303,** and the requirements of the particular test regime being carried out, it will be appreciated that the sample location chosen may be one of few (perhaps even one), or one of a large number. In this step, the laser **303** and camera **304** may be positioned and angled to illuminate and collect light from the sample location.

At step **602,** the camera parameters are selected to produce a correct exposure. In the present example, the camera **304** has a fixed aperture lens and so in this step a metering operation takes place in which exposure length and sensor sensitivity are adjusted to give a correct exposure. Such procedures are known.

At step **603,** an exposure is taken of the speckle pattern caused by the scattering of the laser light by the surface at the sample location. The image produced by the camera **304** is then transmitted at step **604** to the personal computer **305,** whereupon it may be committed to storage on the solid-state disk **403**.

At step **605,** a question is asked as to whether any further surface locations are to be sampled. If so, then control returns to step **601** and the above procedures are repeated. If the question asked at step **605** is answered in the negative, then all surface locations have been imaged and step **505** is complete.

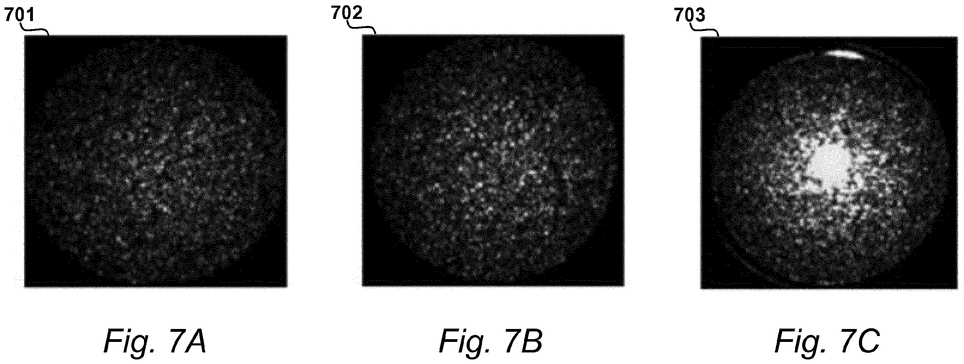

An image **701** is shown in Figure 7A, and is the speckle pattern of a surface location where the roughness was equivalent to 220 grit.

An image 702 is shown in Figure 7B, and is the speckle pattern of a surface location where the roughness was equivalent to 600 grit.

An image 703 is shown in Figure 7C, and is the speckle pattern of a surface location where the roughness was equivalent to 1500 grit.

As may be discerned from the images **701, 702** and **703,** the coarser the surface (the lower grit value in the present example), the lower the contrast in the image. The present invention therefore utilises an image processing scheme to quantify the differences between the speckle patterns caused by surfaces of different roughness, thereby allowing a determination to be made as to the roughness of the surface.

Steps carried out in the present embodiment by the personal computer **305** to process the images in step **506** are set out in Figure 8.

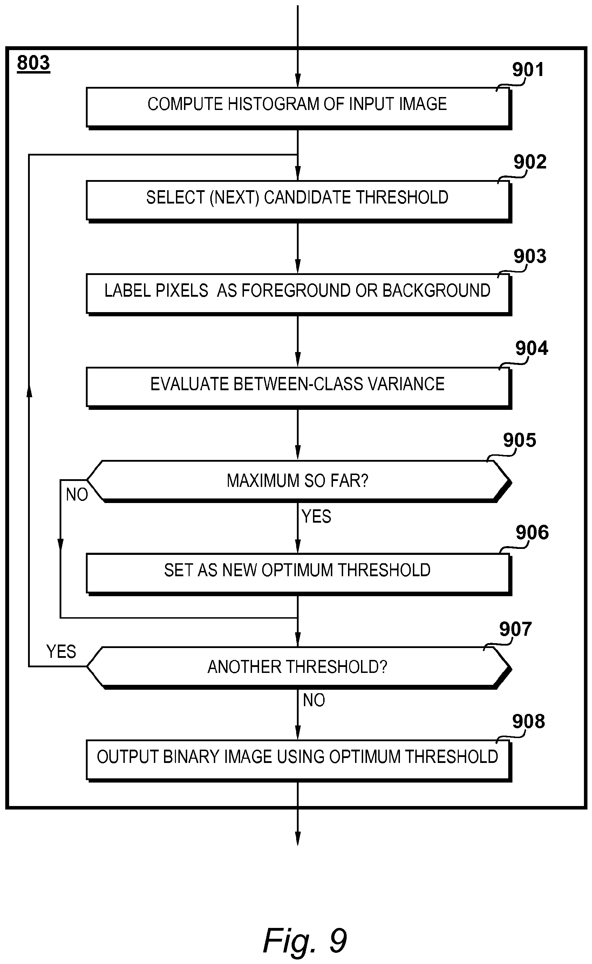

At step **801,** an image stored on the solid-state disk **403** at step **604** is loaded into memory for processing. At step **802,** the image is converted into a binary image, i.e. pixels are classified as either *foreground* pixels or *background* pixels depending upon their level in relation to a threshold. In the present embodiment, the threshold is one of a number of possible candidate thresholds. Selection of the candidate threshold to be used for foreground/background classification may performed unsupervised and automatically. This process will be described further with reference to Figure 9. In alternative implementations, the threshold may be chosen manually, or may be fixed.

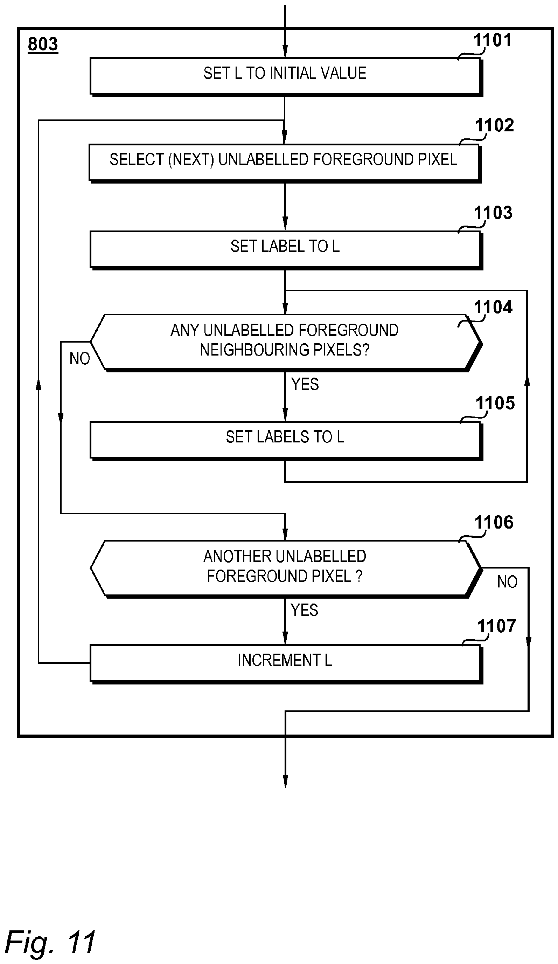

Regions of connected components in the binary image are then identified in step **803,** which process will be described with reference to Figure 11. To qualify as a regions, any two foreground pixels in the region must be joined by a continuous path of foreground pixels.

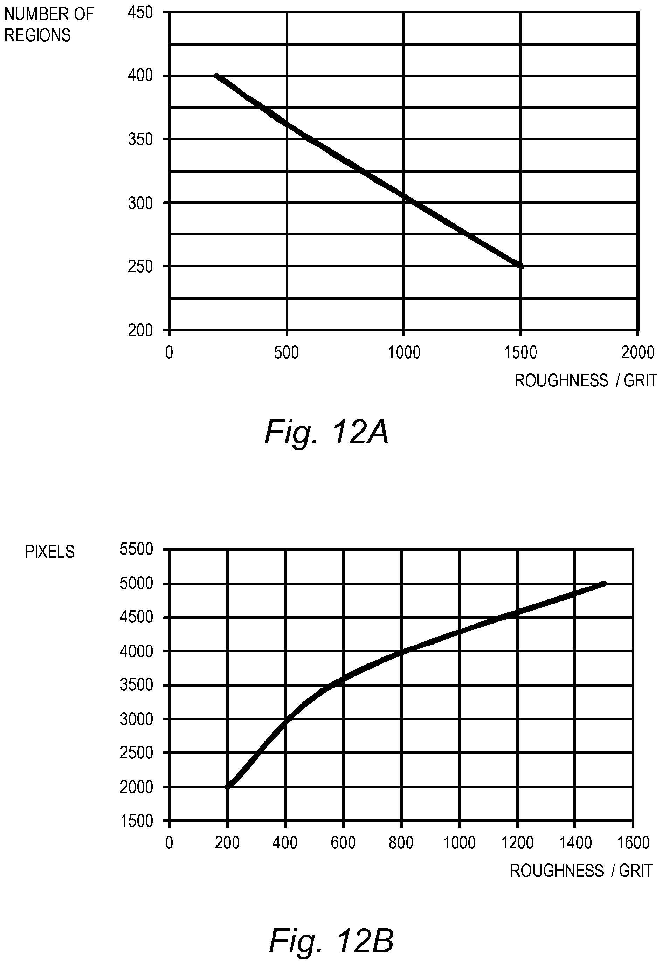

In the present embodiment, a flood-fill approach is taken to identify the regions, but it will be appreciated that any suitable algorithm for identifying connected components may be used. As will be described further with reference to Figures 12A and 12B, both the number of regions of connected components, and the number of pixels in the largest region correlate with the roughness of a surface.

In this way, an indication of a measure of the surface roughness may be output at step **804** by using a lookup table stored in memory to convert the statistics of the output of step **803** into a measure of roughness, for example. In the present embodiment, the statistics are the total number of regions of connected components and the number of pixels in the largest region of connected components.

Alternatively, a relation may be derived from empirical testing which may be stored as part of the program instructions of the present invention, which is then used during step **804** to convert the statistics generated from the output of step **803** into a measure of surface roughness.

Following production of a measure of the roughness for the surface that caused the speckle pattern which was the subject of the image loaded at step **801,** a question is asked at step **805** as to whether any other images are to be processed. If so, control returns to step **801** where the next image is loaded for processing. If not, then the question is answered in the negative and step **506** is complete.

As described previously, in the present embodiment the procedure for conversion into a binary image may be carried out unsupervised and automatically. The processes carried out during step **802** to achieve this are set out in Figure 9.

At step **901,** the histogram of the image loaded into memory at step **801** is computed. As will be familiar to those skilled in the art, the histogram of an image comprises bins, each one of which represents a certain level. Each bin records the number of pixels in the image having that particular level.

At step **902,** a candidate threshold is selected. For the present case where the images produced by the camera **304** are 8 bit greyscale images, there may be 254 thresholds, corresponding to levels 1 to 254, which would respectively split the image into background pixels of level 0 and foreground pixels of level 1 and over, and background pixels of level 254 and under and foreground pixels of level 255. However, it will be appreciated that any number of thresholds could be provided, in any distribution. Thus for example, there may be 32 candidate thresholds, each separated by 8 levels. Alternatively, the distribution of thresholds may resemble a gamma curve for example, with lower level thresholds being more spaced apart than higher ones, for example.

Thus at step **903** the pixels in the image are classified as either foreground pixels if they are of greater than or equal level to the threshold, or background pixels if they are lower in level than the threshold.

The histogram produced at step **901** is then utilised to perform step **904.** In this step, the background pixels are considered a class $C_0$ and the background pixels are another class $C_1$. The probabilities of class occurrence or weights are $\omega_0$ and $\omega_1$, which are the zeroth order cumulative moments of the histogram either side of the threshold. The class mean levels are $\mu_0$ and $\mu_1$, which are the first order cumulative moments of the histogram either side of the threshold.

It may be shown that the optimum threshold is located at a point where there is both the lowest variance in the levels of the background pixels and the lowest variance in the levels of the background pixels, i.e. a minimised *within-class* variance. It may be shown that maximising the *between-class* variance is equivalent to minimising the within-class variance, and is more computationally efficient.

The between-class variance $\sigma_B^2$ is evaluated by calculating the product of the weights, multiplied by the square of the difference between the background mean and the foreground mean, i.e. $\omega_0\omega_1(\mu_0 - \mu_1)^2$.

At step **905**, a question is asked as to whether the value of $\sigma_B^2$ evaluated at step **904** is the maximum thus far. If so, then the candidate threshold selected at the current iteration of step **902** is set as the new optimum threshold. Then, or if the question asked at step **905** was answered in the negative, then a further question is asked as to whether another candidate threshold needs to be considered. If so, control returns to step **902** where the next candidate threshold is selected. If not, then control proceeds to step **908** where a binary image is outputted utilising the optimum threshold.

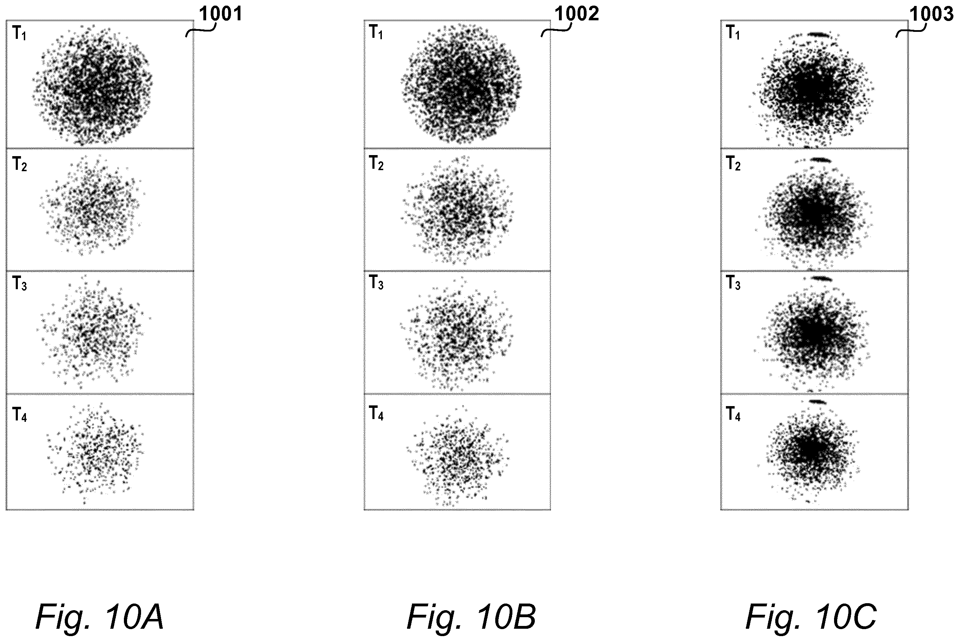

Binary images derived from the images of the speckle patterns **701**, **702** and **703** are shown in Figures 10A, 10B and 10C respectively. The binary images were obtained by utilising four different candidate thresholds $T_1$ to $T_4$ during step **802**. In the present example, binary images **1001**, **1002**, and **1003**, derived from image **701**, **702**, and **703** respectively using a threshold $T_1$, were deemed to exhibit the maximal between-class variance. Thus threshold $T_1$ was selected as the threshold to use for the output step **908** for each iteration of step **802** as step **506** was applied to images **701**, **702** and **703**. (It will be appreciated that given different input images more thresholds the result would be likely to be different.)

Procedures carried out to identify regions of connected components in the binary image during step **803**, are set out in Figure 11. The steps will be recognised by those skilled in the art as implementing a flood-fill, whereby for a foreground pixel P, all the other foreground pixels in the region which containing P are labelled identically. It will be appreciated that other algorithms for identifying connected components may be implemented, such as a two-pass or raster scan algorithm.

At step **1101**, an iterative variable L is set to an initial value, which in this example is 1. Variable L is used to label pixels as forming part of a particular region of connected components in the image. At step **1102**, the first unlabelled foreground pixel (P) in the image is selected, and is labelled with L at step **1103**.

A question is then asked at step **1104** as to whether there are any pixels neighbouring the pixel P which are also unlabelled foreground pixels (N).

In the present embodiment, a pixel is a neighbouring pixel N if it is 8-connected to the pixel P. In an alternative implementation, a pixel may be considered a neighbouring pixel if it is only 4-connected to the pixel P. If the question asked at step **1104** is answered in the affirmative, then the labels of the neighbouring pixels N are set to L at step **1105**. Control returns to step **1104**, where the question asked results in unlabelled foreground pixels which neighbour the original neighbouring pixels (if they exist) also being labelled with L at step **1105**. This process iterates until the question asked at step **1104** is answered in the negative. At this point, a region of connected components has been identified, and the pixels in the region have all been labelled with L.

Control therefore proceeds to step **1106**, where a question is asked as to whether there is a further unlabelled foreground pixel in the image. If so, then L is incremented at step **1107** and control returns to step **1102** where the next unlabelled foreground pixel is selected, and it, and as a result of the iterative steps **1104** and **1105**, the region it forms part of, are labelled with the new value of L.

Eventually, all foreground pixels will be labelled, and step **803** will be complete. Thus, the total number of regions of connected components and the number of pixels in the largest region of connected components may be counted.

A plot of surface roughness - in this case grit number - against the total number of regions of connected components is shown in Figure 12A.

As described previously, and as may be seen from the plot, it has been found by the present inventors that there is a relationship between the roughness of a surface, and the number of regions of connected components in the binary images derived from images of the speckle pattern caused by scattering of coherent light from the surface. In this case, there is a positive correlation: the higher the roughness (lower grit number), the higher the number of regions of connected components.

Further, referring now to Figure 12B, it can be seen that there is a negative relationship between surface roughness - again, expressed in grit number on the plot - against the number of pixels in the largest region of connected components.

As described previously, by utilising the two measures illustrated in Figures 12A and 12B it is possible to determine the roughness of the surface.

It will be appreciated by those skilled in the art that the conversion to a binary image does impose latency in terms of the processing of the image loaded at step **801**. However, the use of a binary image as the basis for identifying regions of connected components means that a significant reduction in processing time at step **803** is achieved.

This is because the binary image simply classifies each pixel as being in one of two states, which greatly reduces the complexity of the algorithm required for identification of connected components. By contrast, greyscale images, where each pixel may occupy one of a plurality of levels (e.g. 256 for an 8 bit image), require for example parallel processing techniques to be employed which inherently are greater in terms of complexity.

Due to the reduction in processing time required by steps **802** and **803** it is envisaged that the present invention may be applied to production-line measurement processes.

It will be understood that the invention is not limited to the embodiments described herein, and various modifications and improvements can be made without departing from the concepts described, as long as they fall within the scope of the appended claims.

## Claims

1. A method to determine surface roughness, comprising:

   obtaining (603) an image (701-703) of speckle caused by the scattering of coherent light from a surface;
   converting (802) the image into a binary image (1001-1003) according to a threshold ($T_1$-$T_4$), thereby classifying pixels below the threshold as background pixels and pixels above the threshold as foreground pixels; and
   identifying (803) one or more regions of connected foreground pixels in the binary image, in which any two foreground pixels in a region are joined by a continuous path of foreground pixels; **characterised by**
   evaluating the total number of regions identified, and evaluating the number of pixels in the largest region, each of which correlate with surface roughness;
   converting (804) the total number of regions identified and the number of pixels in the largest region to a measure of the surface roughness of the surface using a predefined relation therebetween; and
   outputting an indication of the measure of the surface roughness of the surface.

2. The method of claim 1, further comprising the step of selecting the threshold from a plurality of candidate thresholds.

3. The method of claim 2, in which the selection from a plurality of candidate thresholds is performed unsupervised and automatically.

4. The method of claim 2 or claim 3, in which the threshold that is selected is the candidate threshold which produces a binary image with both the lowest variance in level between pixels classified as foreground pixels and the lowest variance between pixels classified as background pixels.

5. The method of claim 1, in which the identifying step comprises:

   selecting an unlabelled foreground pixel P in the binary image; and
   performing a flood-fill procedure to label all the other foreground pixels in the region which contains P.

6. The method of claim 1, in which the obtaining step comprises:

   directing a coherent illumination device (303) towards the surface;
   imaging the speckle pattern with an imaging device (304).

7. The method of claim 6, in which the coherent illumination device is a laser.

8. The method of claims 6 or claim 7, in which:

   the coherent illumination device generates light in the infrared band; and
   the imaging device is sensitive to the infrared band.

9. Instructions executable by a computer that, when executed by the computer, cause the computer to perform the method of any one of claims 1 to 5.

10. A computer-readable medium (407) having the instructions of claim 9 encoded thereon

11. A measurement system (301) for determining the roughness of a surface, comprising:

    a coherent illumination device (303) configured to illuminate the surface with coherent light;
    an imaging device (304) configured to obtain an image of speckle caused by the scattering of the coherent light from the surface; and
    a processing device (305) configured to:

    convert (802) the image (701-703) into a binary image (1001-1003) according to a threshold ($T_1$-$T_4$), thereby classifying pixels below the threshold as background pixels and pixels above the threshold as foreground pixels,
    identify one or more regions of connected foreground pixels in the binary image, in which any two foreground pixels in a region are joined by a continuous path of foreground pixels, **characterised by** being further configured to:

    evaluate the total number of regions identified and evaluate the number of pixels in the largest region, each of which correlate with surface roughness,
    convert the total number of regions identified and the number of pixels in the largest region to a measure of the surface roughness of the surface using a predefined relation therebetween, and
    output an indication of the measure of the surface roughness of the surface.

**12.** The measurement system of claim 11, in which the processing device is configured to select the threshold from a plurality of candidate thresholds.

**13.** The measurement system of claim 12, in which the processing device is configured to perform the selection from the plurality of candidate thresholds unsupervised and automatically.

**14.** The measurement system of claim 12 or claim 13, in which the processing device is configured to select the candidate threshold which produces a binary image with both the lowest variance in level between pixels classified as foreground pixels and the lowest variance between pixels classified as background pixels.

**15.** The measurement system of claim 11, in which the processing device is configured to identify the one or more regions of connected foreground pixels in the binary image by:

selecting (1102) an unlabelled foreground pixel P in the binary image; and
performing (1103-1105) a flood-fill procedure to label all the other foreground pixels in the region which contains P.

**Patentansprüche**

**1.** Verfahren zur Bestimmung von Oberflächenrauigkeit, umfassend:

ein Erhalten (603) eines Bilds (701-703) von durch die Streuung kohärenten Lichts von einer Oberfläche verursachtem Speckle;
ein Konvertieren (802) des Bilds in ein binäres Bild (1001-1003) gemäß einem Schwellwert $(T_1\text{-}T_4)$, dadurch Klassifizieren von Pixeln unter dem Schwellwert als Hintergrundpixel und von Pixeln über dem Schwellwert als Vordergrundpixel; und
ein Identifizieren (803) einer oder mehrerer Regionen verbundener Vordergrundpixel im binären Bild, in denen beliebige zwei Vordergrundpixel in einer Region durch einen kontinuierlichen Pfad aus Vordergrundpixeln verbunden sind; **gekennzeichnet durch**
ein Evaluieren der Gesamtanzahl identifizierter Regionen und ein Evaluieren der Anzahl von Pixeln in der größten Region, wobei jede mit Oberflächenrauigkeit korreliert;
ein Konvertieren (804) der Gesamtanzahl identifizierter Regionen und der Anzahl von Pixeln in der größten Region zu einem Maß der Oberflächenrauigkeit der Oberfläche mithilfe einer vordefinierten Beziehung dazwischen; und

ein Ausgeben einer Anzeige des Maßes der Oberflächenrauigkeit der Oberfläche.

**2.** Verfahren nach Anspruch 1, ferner umfassend den Schritt des Auswählens des Schwellwerts aus einer Vielzahl von Kandidatenschwellwerten.

**3.** Verfahren nach Anspruch 2, wobei die Auswahl au seiner Vielzahl von Kandidatenschwellwerten unüberwacht und automatisch ausgeführt wird.

**4.** Verfahren nach Anspruch 2 oder Anspruch 3, wobei der Schwellwert, der ausgewählt wird, der Kandidatenschwellwert ist, der ein Binärbild mit sowohl der untersten Varianz im Niveau zwischen Pixeln, die als Vordergrundpixel klassifiziert sind, als auch der untersten Varianz zwischen Pixeln, die als Hintergrundpixel klassifiziert sind, erzeugt.

**5.** Verfahren nach Anspruch 1, wobei der Schritt des Identifizierens umfasst:

ein Auswählen eines nicht gekennzeichneten Vordergrundpixels P im Binärbild;
und ein Ausführen eines Ausfüllverfahrens, um alle anderen Vordergrundpixel in der Region, die P enthält, zu kennzeichnen.

**6.** Verfahren nach Anspruch 1, wobei der Schritt des Erhaltens umfasst:

ein Richten einer kohärenten Beleuchtungsvorrichtung (303) zur Oberfläche;
ein Abbilden des Speckle-Musters mit einer Abbildungsvorrichtung (304).

**7.** Verfahren nach Anspruch 6, wobei die kohärente Beleuchtungsvorrichtung ein Laser ist.

**8.** Verfahren nach Ansprüchen 6 oder 7, wobei:

die kohärente Beleuchtungsvorrichtung Licht im Infrarotband generiert;
und die Beleuchtungsvorrichtung empfindlich gegenüber dem Infrarotband ist.

**9.** Computerausführbare Anweisungen, die bei Ausführung durch den Computer den Computer veranlassen, das Verfahren nach einem der Ansprüche 1 bis 5 auszuführen.

**10.** Computerlesbares Medium (407) mit darauf verschlüsselt den Anweisungen nach Anspruch 9.

**11.** Messsystem (301) zum Bestimmen der Rauigkeit einer Oberfläche, umfassend:

eine kohärente Beleuchtungsvorrichtung (303), die konfiguriert ist, um die Oberfläche mit kohärentem Licht zu beleuchten;

eine Abbildungsvorrichtung (304), die konfiguriert ist, um ein Bild von durch die Streuung des kohärenten Lichts von der Oberfläche verursachtem Speckle zu erhalten;

und eine Verarbeitungseinheit (305), die konfiguriert ist, um:

das Bild (701-703) gemäß einem Schwellwert ($T_1$-$T_4$) in ein binäres Bild (1001-1003) zu konvertieren (802), wodurch Pixel unter dem Schwellwert als Hintergrundpixel klassifiziert werden und Pixel über dem Schwellwert als Vordergrundpixel klassifiziert werden,

eine oder mehrere Regionen verbundener Vordergrundpixel im Binärbild zu identifizieren, in denen beliebige zwei Vordergrundpixel in einer Region durch einen kontinuierlichen Pfad aus Vordergrundpixeln verbunden sind, **dadurch gekennzeichnet, dass** sie ferner konfiguriert ist, um:

die Gesamtanzahl identifizierter Regionen zu evaluieren und die Anzahl von Pixeln in der größten Region zu evaluieren, wobei jede davon mit Oberflächenrauigkeit korreliert,

die Gesamtanzahl identifizierter Regionen zu konvertieren und die Anzahl von Pixeln in der größten Region zu einem Maß der Oberflächenrauigkeit der Oberfläche mithilfe einer vordefinierten Beziehung dazwischen zu konvertieren und

eine Anzeige des Maßes der Oberflächenrauigkeit der Oberfläche auszugeben.

**12.** Messsystem nach Anspruch 11, wobei die Verarbeitungsvorrichtung konfiguriert ist, um den Schwellwert aus einer Vielzahl von Kandidatenschwellwerten auszuwählen.

**13.** Messsystem nach Anspruch 12, wobei die Verarbeitungsvorrichtung konfiguriert ist, um die Auswahl aus der Vielzahl von Kandidatenschwellwerten unüberwacht und automatisch auszuführen.

**14.** Messsystem nach Anspruch 12 oder Anspruch 13, wobei die Verarbeitungsvorrichtung konfiguriert ist, um den Kandidatenschwellwert auszuwählen, der ein Binärbild sowohl mit der niedrigsten Varianz im Niveau zwischen Pixeln, die als Vordergrundpixel klassifiziert sind, und der niedrigsten Varianz zwischen Pixeln, die als Hintergrundpixel klassifiziert sind, erzeugt.

**15.** Messsystem nach Anspruch 11, wobei die Verarbeitungsvorrichtung konfiguriert ist, um die eine oder mehreren Regionen verbundener Vordergrundpixel im Binärbild zu identifizieren durch:

Auswählen (1102) eines nicht gekennzeichneten Vordergrundpixels P im Binärbild; und Ausführen (1103-1105) eines Ausfüllverfahrens, um alle anderen Vordergrundpixel in der Region, die P enthält, zu kennzeichnen.

## Revendications

**1.** Procédé de détermination d'une rugosité de surface, comprenant :

l'obtention (603) d'une image (701 à 703) de tavelure causée par la diffusion de lumière cohérente depuis une surface ;

la conversion (802) de l'image en une image binaire (1001 à 1003) en fonction d'un seuil ($T_1$ à $T_4$), permettant de la sorte de classifier des pixels sous le seuil en tant que pixels d'arrière-plan et des pixels au-dessus du seuil en tant que pixels d'avant-plan ; et

l'identification (803) d'une ou plusieurs zones de pixels d'avant-plan connectés dans l'image binaire, dans lequel deux quelconques pixels d'avant-plan dans une zone sont reliés par un chemin continu de pixels d'avant-plan ;

**caractérisé par** l'évaluation du nombre total de zones identifiées, et l'évaluation du nombre de pixels dans la zone la plus grande, chacun desquels est en corrélation avec la rugosité de surface ;

la conversion (804) du nombre total de zones identifiées et du nombre de pixels dans la zone la plus grande en une mesure de la rugosité de surface de la surface en utilisant une relation prédéfinie entre eux ;

et la délivrance d'une indication de la mesure de la rugosité de surface de la surface.

**2.** Procédé selon la revendication 1, comprenant en outre l'étape de sélection du seuil parmi une pluralité de seuils candidats.

**3.** Procédé selon la revendication 2, dans lequel la sélection parmi une pluralité de seuils candidats est effectuée sans supervision et automatiquement.

**4.** Procédé selon la revendication 2 ou 3, dans lequel le seuil qui est sélectionné est le seuil candidat qui produit une image binaire avec à la fois le niveau de la variance la plus basse entre des pixels classifiés en tant que pixels d'avant-plan et de la variance la plus basse entre des pixels classifiés en tant que pixels d'arrière-plan.

**5.** Procédé selon la revendication 1, dans lequel l'étape d'identification comprend :

    la sélection d'un pixel P d'avant-plan non-étiqueté dans l'image binaire ;
    et l'exécution d'une procédure de remplissage par diffusion pour étiqueter tous les autres pixels d'avant-plan dans la zone qui contient P.

6. Procédé selon la revendication 1, dans lequel l'étape d'obtention comprend :

    la direction d'un dispositif d'illumination cohérente (303) en direction de la surface ;
    l'imagerie du motif de tavelure avec un dispositif d'imagerie (304).

7. Procédé selon la revendication 6, dans lequel le dispositif d'illumination cohérente est un laser.

8. Procédé selon la revendication 6 ou 7, dans lequel :

    le dispositif d'illumination cohérente génère une lumière dans la bande infra-rouge ;
    et le dispositif d'imagerie est sensible à la bande infra-rouge.

9. Instructions exécutables par un ordinateur qui, lorsqu'elles sont exécutées par l'ordinateur, amènent l'ordinateur à exécuter le procédé selon l'une quelconque des revendications 1 à 5.

10. Support lisible par un ordinateur (407) ayant les instructions selon la revendication 9 encodées sur celui-ci.

11. Système de mesure (301) destiné à déterminer la rugosité d'une surface, comprenant :

    un dispositif d'illumination cohérente (303) configuré pour illuminer la surface avec une lumière cohérente ;
    un dispositif d'imagerie (304) configuré pour obtenir une image de tavelure causée par la diffusion de la lumière cohérente depuis la surface ;
    et un dispositif de traitement (305) configuré pour :
    convertir (802) l'image (701 à 703) en une image binaire (1001 à 1003) en fonction d'un seuil ($T_1$ à $T_4$), permettant de la sorte de classifier des pixels sous le seuil en tant que pixels d'arrière-plan et des pixels au-dessus du seuil en tant que pixels d'avant-plan, identifier une ou plusieurs zones de pixels d'avant-plan connectés dans l'image binaire, dans lesquelles deux quelconques pixels d'avant-plan dans une zone sont reliés par un chemin continu de pixels d'avant-plan, **caractérisé en ce qu'**il est en outre configuré pour :

évaluer le nombre total de zones identifiées et évaluer le nombre de pixels dans la zone la plus grande, chacun desquels est en corrélation avec la rugosité de surface, convertir le nombre total de zones identifiées et le nombre de pixels dans la zone la plus grande en une mesure de la rugosité de surface de la surface en utilisant une relation prédéfinie entre eux, et délivrer une indication de la mesure de la rugosité de surface de la surface.

12. Système de mesure selon la revendication 11, dans lequel le dispositif de traitement est configuré pour sélectionner le seuil parmi une pluralité de seuils candidats.

13. Système de mesure selon la revendication 12, dans lequel le dispositif de traitement est configuré pour effectuer la sélection parmi la pluralité de seuils candidats sans supervision et automatiquement.

14. Système de mesure selon la revendication 12 ou 13, dans lequel le dispositif de traitement est configuré pour sélectionner le seuil candidat qui produit une image binaire avec à la fois le niveau de la variance la plus basse entre des pixels classifiés en tant que pixels d'avant-plan et de la variance la plus basse entre des pixels classifiés en tant que pixels d'arrière-plan.

15. Système de mesure selon la revendication 11, dans lequel le dispositif de traitement est configuré pour identifier l'une ou plusieurs zones de pixels d'avant-plan connectés dans l'image binaire par :

    la sélection (1102) d'un pixel P d'avant-plan non-étiqueté dans l'image binaire ;
    et l'exécution (1103 à 1105) d'une procédure de remplissage par diffusion pour étiqueter tous les autres pixels d'avant-plan dans la zone qui contient P.

*Fig. 1*

EP 3 385 906 B1

*Fig. 2*

EP 3 385 906 B1

*Fig. 3*

*Fig. 4*

EP 3 385 906 B1

**501** POWER ON

**502** INSTRUCTIONS INSTALLED?

**503** INSTALL INSTRUCTIONS

**504** LOCATE (NEXT) COMPONENT IN FIXTURE

**505** OBTAIN IMAGES

**506** PROCESS IMAGES

**507** ANOTHER COMPONENT?

YES

NO

**508** SHUT DOWN

*Fig. 5*

**505**

SELECT (NEXT) SAMPLE LOCATION ON SURFACE — **601**

OPTIMISE CAMERA PARAMETERS — **602**

CAPTURE IMAGE — **603**

ADD TO STORAGE — **604**

YES ◁ ANOTHER SURFACE LOCATION? — **605**

NO

*Fig. 6*

701

702

703

*Fig. 7A*

*Fig. 7B*

*Fig. 7C*

**506**

LOAD (NEXT) IMAGE — 801

CONVERT TO BINARY IMAGE — 802

IDENTIFY CONNECTED COMPONENTS IN BINARY IMAGE — 803

OUTPUT MEASURE OF SURFACE ROUGHNESS — 804

ANOTHER IMAGE? — 805

YES

NO

*Fig. 8*

**803**

COMPUTE HISTOGRAM OF INPUT IMAGE — 901

SELECT (NEXT) CANDIDATE THRESHOLD — 902

LABEL PIXELS AS FOREGROUND OR BACKGROUND — 903

EVALUATE BETWEEN-CLASS VARIANCE — 904

MAXIMUM SO FAR? — 905

NO

YES

SET AS NEW OPTIMUM THRESHOLD — 906

YES

ANOTHER THRESHOLD? — 907

NO

OUTPUT BINARY IMAGE USING OPTIMUM THRESHOLD — 908

*Fig. 9*

*Fig. 10A*　　　*Fig. 10B*　　　*Fig. 10C*

EP 3 385 906 B1

*Fig. 11*

NUMBER OF
REGIONS

ROUGHNESS / GRIT

*Fig. 12A*

PIXELS

ROUGHNESS / GRIT

*Fig. 12B*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AL-QUZWENY, MAYADA B. et al.** Different methods for characterizing surface roughness using laser speckle technique. *Iraqi Journal of Physics (IJP),* 2014, vol. 12 (23), 21-29